# EUROPEAN PATENT SPECIFICATION

(11) **EP 2 416 666 B1**
(45) Date of publication and mention of the grant of the patent: **12.11.2014**
(21) Application number: 10714051.9
(22) Date of filing: 06.04.2010
(51) Int. Cl.: A23F 5/38

(54) **FOAMING COFFEE COMPOSITIONS**
SCHÄUMENDE KAFFEEZUBEREITUNGEN
COMPOSITIONS DE CAFE MOUSSANT

(30) Priority: 06.04.2009 GB 0905976
(43) Date of publication of application: 15.02.2012
(60) Divisional application: 14185726.8
(73) Proprietor: Kraft Foods R & D, Inc., Deerfield, IL 60015 (US)
(72) Inventor: IMISON, Thomas, Philip, Oxfordshire OX16 4FP (GB)
(74) Representative: Boult Wade Tennant
(86) International application number: PCT/GB2010/000705
(87) International publication number: WO 2010/116138

(56) References cited:
- EP-A1- 0 839 457
- EP-A1- 1 198 992
- EP-A1- 2 100 514
- WO-A1-2009/059938
- US-A- 3 514 300
- US-A1- 2006 040 038

## Description

The present invention relates to a foaming coffee composition. More particularly, the invention relates to a foaming soluble coffee composition formed by agglomerating particles of foaming soluble coffee.

### Background to the invention

Soluble coffees are attractive to the consumer for their ability to easily provide a brewed coffee beverage. Soluble coffees are dried extracts of coffee beans that, when contacted with hot water (for example, water at a temperature of about 60°C to about 100°C, for example about 80°C) dissolves to form a coffee beverage.

Typically, soluble coffee is obtained from coffee beans by the following method, which is provided by way of example. Firstly, coffee in the form of coffee beans is provided. Coffee beans (sometimes called coffee cherries) are harvested as the seeds of plants belonging to the plant genus *Coffea*. For example, Arabica coffee is derived from beans from the *Coffea Arabica* plant and Robusta coffee is derived from beans of the *Coffea canephora* plant. Other non-limiting types of coffee include Brazilian coffee and coffee derived from the *Coffea liberica* and *Coffea esliaca* plants. There exist many varieties within individual types of coffee, each variety for example indicating the geographical origin of the coffee. Soluble coffee may be derived from any variety or type of coffee or any combination of any varieties and / or types.

Before roasting the coffee, the green coffee beans may be processed. For example, caffeine may be removed from the green coffee beans. Suitable decaffeination processes include treating the beans with a heated coffee extract, direct or indirect decaffeination with a solvent such as water, dichloromethane, ethyl acetate or triglyceride, and extraction using supercritical carbon dioxide. Other treatment steps before roasting may also be carried out, for example treatment to modulate flavour-producing compounds in the green coffee bean.

The green coffee beans are then roasted. Roasting is well known in the art. Typically, it involves heating the green beans until they change colour. Apparatuses suitable used for roasting include ovens and fluidized beds.

The degree of roasting is judged by the colour of roasted coffee bean. Roasting levels include light roasts (cinnamon, half city, light and New England), medium-light roasts (light American, light city and West coast), medium roasts (American, breakfast, brown, city and medium), medium-dark roasts (full city, light French and Viennese), dark roasts (after dinner, continental, European, French, Italian and New Orleans) and very dark roasts (dark French and heavy).

After roasting, the coffee may be treated, for example to increase (or decrease) its level of hydration. In another example, the coffee may be processed to reflect a unique flavour characteristic such as espresso.

After roasting, the coffee is ground to produce coffee grounds. Grinding methods include burr grinding, chopping, pounding and roller grinding.

A coffee extract may then be extracted from the coffee grounds by contacting the coffee grounds with hot water. The coffee extract may then be concentrated, for example from about 15 to about 50% coffee by mass or more. The concentrated extract is then dried by, for example, freeze drying or spray drying. Methods of freeze drying and spray drying are well known in the art.

Soluble coffee produced by methods known in the art typically comprises particles with a porous structure. If the pores are on or connected to the surface of the particle they are considered to be open. If the pores are on the interior of the particle and are not connected to the surface of the particle then they are closed pores or bubbles. Some types of conventional soluble coffees, in particular spray-dried coffee, may comprise particles with some closed pores. These coffees may in some cases form a thin layer of foam on the surface of a beverage when re-dissolved.

A water extract of ground roasted coffee can also form a layer of foam on its surface when poured into a cup or when a coffee beverage is prepared from ground roasted coffee using, for example, an espresso machine. This foam is advantageous for consumer acceptance because, for example, it may reassure the consumer that the coffee is genuine coffee. Some consumers also enjoy the mouthfeel produced by the foam of a water extract of ground roasted coffee.

However, the thin foam film that may be produced by conventional soluble coffees is different from that characteristic of a water extract of ground roasted coffee. Partly purely as a result of the existence of this difference, the foam that may be produced by soluble coffees is detrimental to consumer acceptance because it differentiates soluble coffee from freshly ground coffee. In addition, the actual properties of the foam can further reduce consumer acceptance. For example, US 3426227 describes how the foam of a soluble coffee tends to comprise an unsightly froth that is accompanied by a "scum" of insoluble materials which are either natural constituents of the coffee or which are produced during the production of the instant coffee. The combination of the foam and scum is said to present an unappetizing appearance that is undesirable for coffee. CA 670794 describes how this foam is different from the type of foam that consumers expect from a coffee, namely that which appears when a water extract of ground roasted coffee is poured into a cup.

Many techniques have been developed in order to prevent this unsightly foam from forming when re-dissolving a conventional soluble coffee. For example, CA 670794 suggests the incorporation of a small amount of a monoglyceride of a higher fatty acid to change the appearance of the foam when the coffee is contacted with hot water. US 3436227 suggests the use of a de-foaming agent to reduce the appearance of this unsightly foam.

US 3749378 is an example in which the soluble coffee is expected to form an unsightly foam. In this patent, the porous nature of the coffee is used to provide a low density coffee.

However, not all soluble coffee produces foams that are detrimental to consumer acceptance. In particular, EP 0839457 suggests that the reason why the foam formed by some types of soluble coffee is different from the type of foam that consumers expect from a coffee, namely that which appears when a water extract of ground roasted coffee is poured into a cup, is that soluble coffee contains both large bubbles and small bubbles. On dissolution of the soluble coffee, the large bubbles produce larger foam cells and the small bubbles form smaller foam cells. The smaller foam cells then coalesce with the larger foam cells to produce even larger foam cells. The larger foam cells more easily and quickly burst, resulting in a lower foam volume and stability.

EP 0839457 then suggests that it is possible to provide a coffee that foams and is advantageous for consumer acceptance by controlling the size of these bubbles in the soluble coffee so that the particles have a microstructure comprised of interior void space which consists of a majority of gas bubbles of 10 microns or less and a minority of void space in excess of 10 microns. EP 1627568 suggests that it is possible to provide a coffee that foams and is advantageous for consumer acceptance by filling the closed pores with pressurized gas during the manufacture of the foaming coffee. Both of these examples of foaming coffees are thought to facilitate consumer acceptance of their coffees because they can replicate the type and volume of foam produced by a water extract of ground roasted coffee.

Separately, methods of agglomerating soluble coffee are known in the art. A typical agglomeration process is described in the Encyclopaedia of Food Science and Technology 1, p. 13-17 (1992). In this accepted agglomeration process, particles of soluble coffee are initially milled to reduce their size. As discussed in Powder Technology 86, p. 49-57 (1996), this milling process is thought to produce particles that are small enough to then form loose associations of particles, sometimes called dry pre-aggregates. These pre-aggregates are thought to be held together by electrostatic forces, caused by, for example, the frictional charging of particles during milling and / or during mixing. Therefore, reducing the particle size before agglomeration is carried out so that individual particles of soluble coffee are capable of a sufficient particle weight to surface charge / surface interaction ratio in order to keep individual particles in contact with one another.

After milling, the milled particles of soluble coffee are then agglomerated. Many different forms of agglomeration are known in the art. For example, as described in Food Control 6, p. 95-100 (1995), agglomeration can be achieved by compacting individual particles, by growth agglomeration or through agglomeration by drying (e.g. spray-drying).

Typically, agglomeration of soluble coffee is carried out by wet growth agglomeration. This involves exposing the surface of the soluble coffee particles to a binder liquid such as water. The binder liquid may also be provided in its gaseous form, for example as steam as performed in jet agglomeration. When steam is used, the steam can condense to liquid form upon contact with the coffee particles. The liquid binder forms liquid bridges between the individual particles. The liquid binder is then dried to form a solid bridge comprising the solid form of the binder; alternatively or additionally, the liquid binder may dissolve some of the soluble coffee, in which case the solid bridge formed on drying of the binder liquid comprises the soluble coffee itself. It is also possible that, in a process such as jet agglomeration, steam is used simply to soften the surface of the soluble coffee, causing individual soluble coffee particles to adhere to one another.

Examples in which this milling process is followed by agglomeration to form an agglomerated coffee composition include US 3554760 (General Foods Corporation), US 3514300 (Afico S.A.), US 4724620 (Nestec S.A.), US 3227558 (General Foods Corporation), US 4594256 (General Foods Corporation), US 3767419 (General Foods Corporation), US 3716373 (Rhodes), US 3821430 General Foods Corporation), US 3740232 (General Foods Ltd), US 3729327 (General Foods Corporation), US 3695165 (General Foods Corporation) and US 3485637 (General Foods Corporation).

Agglomeration of foaming coffee particles without previous milling is disclosed in post-published WO 2009/059938.

### Summary of the invention

The present invention provides a method of forming an agglomerated foaming coffee composition, the method comprising the step of agglomerating a coffee composition, the majority of the coffee composition by weight consisting of particles of foaming soluble coffee having an internal structure comprising closed pores in which gas is contained,
the coffee composition further comprising one or more of, a tea extract, a dairy product, a sweetener, a nutritional supplement, natural and/or artificial sweeteners, emulsifiers, stabilisers, thickeners, flowing agents, non-foaming coffee, or non-foaming soluble coffee,
wherein at least some of the particles of foaming soluble coffee have not been milled prior to their agglomeration.

The present invention further provides an agglomerated coffee composition produced by this process.

Preferably the method provides an agglomerated foaming coffee composition in which at least 50% by weight of the composition consists of foaming soluble coffee, wherein: (i) the composition exhibits a foam volume using the quantitative in-cup foam test of 2.0 cm³ or greater after 1 minute; and/or (ii) the composition exhibits a foam volume using the quantitative in-cup foam test of 0.7 cm³ or greater after 10 minutes; and/or (iii) the composition exhibits a foam volume after 10 minutes that is at least 40% of the foam volume present after 1 minute; and/or (iv) the composition has a closed pore volume of greater than 0.3cm³/g.

### Detailed description of the invention

The present invention relates to the formation of an agglomerated foaming coffee.

In the past, foaming coffees have been provided in non-agglomerated form. However, the inventor of the present application has recognised that, for some consumers, it would be advantageous to provide the coffee in agglomerated form.

The inventor therefore applied the standard agglomeration techniques of the art to the agglomeration of a foaming coffee. In particular, the inventors milled the foaming coffee and then agglomerated it using techniques known in the art.

However, when the inventor followed the standard agglomeration techniques, he found that the foaming ability of the agglomerated coffee was significantly reduced compared to the foaming ability of the non-agglomerated coffee. In addition, he found that the characteristics of the foam produced by the agglomerated coffee replicate the characteristics of the foam associated with freshly brewed coffee to a lower degree.

The inventor then found that, if agglomeration is carried out such that the internal structure of the foaming coffee is substantially preserved (for example by agglomerating without a milling step), the foaming ability and foaming characteristics of the agglomerated coffee can be surprisingly maintained.

Accordingly, the present invention provides a method of forming an agglomerated foaming coffee comprising agglomerating particles of foaming soluble coffee, wherein at least a portion of the internal structure of the foaming coffee is preserved during agglomeration. For example, preferably at least some of the particles of foaming soluble coffee have not been milled prior to their agglomeration. The avoidance of a milling step has also been found to improve the solubility of the agglomerated coffee produced.

Without wishing to be bound by theory, the inventor has recognised that the internal structure of foaming coffee is important to the foaming properties of the coffee. In particular, the internal structure comprises closed pores in which gas is contained. On dissolution, the characteristics of the foam produced are dependent on the internal structure of the dry particles of foaming coffee. The inventor has found that milling and grinding as carried out as part of accepted agglomeration techniques perturbs the internal structure of the foaming coffee to an extent that it has a detrimental effect on both the foaming ability and the foaming characteristics of the coffee.

In addition, the inventor has recognised that agglomeration can result in the formation of open pores in the particles of the agglomerated coffee while still maintaining the closed pore structure that causes foaming. Thus, agglomeration of a foaming coffee can result in an agglomerated coffee which not only retains a significant amount of foaming ability, but which also retains the ability to readily dissolve upon reconstitution with hot water. The inventor has found that this result can be preferably caused by controlling the exposure of the foaming coffee to heat and moisture by the agglomerating methods described herein.

"*Aggl*o*meration"* is known in the art to refer to processes in which individual particles in a composition combine to form larger particles. Typically, the individual particles making up the larger particles are still identifiable but are held together to the other individual particles in the agglomerate so that the agglomerate remains as a single particle. For example, the individual particles making up the aggregate may be held together by solid bridges. Typically, the tensile strength of these bridges are of the same order of magnitude as that of the individual particles. For example, the breaking strength of the aggregates may be at least about a tenth of the tensile strength of the individual particles, for example about a quarter to about one times the breaking strength of the individual particles.

As noted previously, accepted agglomeration techniques in the art comprise a step of *"milling"* before agglomeration is carried out in order to reduce particle size to facilitate the formation of *"pre-aggregates".* Milling is known in the art to refer to processes in which the size of individual particles in a composition are reduced. For example, a milling process may involve reduction in the mean particle size of a composition. Mean particle size may be measured using a diffraction spectrometer. For example, a typical milling technique may involve a reduction in mean particle size of at least 50%, for example 50% to 90%.

Techniques of reducing particle size are known in the art. For example, grinding is known to reduce particle size of a soluble coffee.

An example of a suitable diffraction spectrometer for measuring mean particle size is the Sympatec Helos/LAlaser diffraction spectrometer at room temperature (20°C) and pressure (1 atmosphere). The output data from this spectrometer is provided as a table of size distribution (number vs. size), from which the number-averaged particle size may be calculated.

The *"foaming coffee"* of the present invention refers to coffees that mimics the foam produced when a water extract of ground roasted coffee is poured into a cup.

For example, the foaming coffee of the present invention may produce a greater quantity of foam and a foam that has finer bubbles and hence is longer lasting than the foam produced by a soluble coffee that is detrimental to consumer acceptance.

The extent to which a coffee foams can be measured by the quantitative in-cup foam test. This test measures the amount of foam generated by a composition upon reconstitution. In this method, 1.8g of the composition being tested is weighed into a 100 cm³ cylindrical glass measuring cylinder of 25 mm diameter and 250 mm height at 20°C, and then 70 cm³ of water at 80°C is poured onto it from a beaker through a funnel at the top of the measuring cylinder over a period of about 5 seconds. The funnel used consists of a conical section of base diameter 50 mm and height 40 mm, connected to a tubular section of internal diameter 5 mm and length 50 mm. The funnel controls the addition of water used to reconstitute the composition. The foam volumes generated by the composition upon reconstitution are noted at 1 & 10 minute time intervals. All measurements are carried out in duplicate.

Thus, for example, the foaming coffee (both the particles of foaming coffee used as starting material or the agglomerated coffee product) of the present invention may exhibit one or more of the following properties:
1. The coffee may exhibit a foam volume using the quantitative in-cup foam test of 2.0 cm³ or greater after 1 minute, for example 2.5 cm³ to 10.0 cm³, more preferably 3.0 cm³ to 6.0 cm³ after 1 minute. This level of foaming over 1 minute may be advantageous in terms of consumer acceptance and may be greater than soluble coffee that produces a foam that is detrimental to consumer acceptance.
2. The coffee may exhibit a foam volume using the quantitative in-cup foam test of 0.7 cm³ or greater after 10 minutes, for example 1.0 cm³ to 8.0 cm³, more preferably 1.5 cm³ to 5 cm³ after 10 minutes. This amount of foam remaining after 10 minutes may be advantageous in terms of consumer acceptance and may be greater than coffee that produces a foam that is detrimental to consumer acceptance.
3. The coffee may exhibit a foam volume after 10 minutes that is at least 40% of the foam volume present after 1 minute, such as between 40% and 100%. More preferably, the foam volume after 10 minutes is 50% to 90%, such as 60% to 75%. Thus, preferably the foam produced by the foaming coffee of the present invention reduces over time but remains at a level that is still advantageous for consumer acceptance. This level of retention of foam may be greater than that of soluble coffee that produces a foam that is detrimental to consumer acceptance.
4. The coffee may exhibit a closed pore volume of greater than 0.3cm³/g, for example 0.5 to 3.0 cm³/g, for example 0.75 cm³/g to 1.5 cm³/g, such as about 1.0 cm³/g

The coffee of the present invention may, for example, exhibit at least one of properties 1 to 3 (i.e. the foam volume retention) and may also exhibit one or more of the other three conditions. For example, the coffee may exhibit properties 1, 3 and 4. Preferably, the coffee exhibits all four properties.

By way of comparison, a commercially available freeze-dried coffee measured by this test typically exhibits a foam volume of just 1.5 cm³ after 1 minute, reducing to a foam volume of just 0.5 cm³ after 10 minutes. Thus, a typical soluble coffee shows a retention of foam of only 33% after 10 minutes compared to 1 minute.

Foaming coffees also tend to have a higher closed pore volume than conventional coffees. For example, conventional soluble coffee may have a closed pore volume of about 0.05 cm³/g. That is, the total volume of the closed pores within the particles, as described below, is about 0.05 cm³ for each gram of the coffee particles. In contrast, the foaming coffees of the present invention preferably have a closed pore volume of about 0.3 cm³/g or greater, such as 0.5 cm³/g to 3.0 cm³/g, for example 0.75 cm³/g to 1.5 cm³/g, such as about 1.0 cm³/g.

Closed pore volume can be measured by firstly measuring the skeletal density (g/cm³) of the material by measuring the volume of a weighed amount of powder or granules using a helium Pycnometer (Micromeritics AccuPyc 1330) and dividing weight by volume. Skeletal density is a measure of density that includes the volume of any pores present in the particles that are sealed to the atmosphere and excludes the interstitial volume between particles and the volume of any pores present in the particles that are open to the atmosphere. The volume of sealed pores, referred to herein as closed pore volume, is derived from also measuring the skeletal density of the powder or granules after grinding with mortar and pestle to remove or open all interior (closed) pores to the atmosphere. This type of skeletal density, referred to herein as true density (g/cm³) is the actual density of only the solid matter comprising the powder or granules. Closed pore volume (cm³/g) is determined by subtracting the reciprocal true density (cm³/g) from the reciprocal skeletal density (cm³/g). Optionally the closed pore volume can also be expressed as volume percent of closed pore volume contained in the particles comprising the powder or granules. The percent closed pore volume is determined by subtracting the reciprocal true density (cm³/g) from the reciprocal skeletal density (cm³/g) and then multiplying the difference by skeletal density and 100%.

The foaming coffee particles used in the method of the present invention are made from a soluble coffee. The soluble coffee particles may be, for example, spray-dried soluble coffee particles and / or freeze-dried soluble coffee particles.

The particles of foaming coffee that are agglomerated are contained in a coffee composition. The majority of the coffee composition (in terms of weight) consists of particles of foaming coffee.

Preferably, the coffee composition contains at least about 55 wt% of particles of foaming coffee. More preferably, the coffee composition contains about 60 wt% to about 100 wt% of particles of foaming coffee, for example at least about 80 wt%, such as about 100 wt%. In particular, the foaming ability and characteristics of the agglomerate become more prominent as the proportion of the foaming coffee particles in the coffee composition increases.

The coffee composition contains, apart from the at least 50% by weight of particles of foaming coffee, additional components. These components include one or more of a tea extract, a dairy product, a sweetener, and a nutritional supplement. Additional optional ingredients include natural and / or artificial sweeteners, emulsifiers, stabilizers, thickeners, and flowing agents. The coffee composition can contain non-foaming coffee, for example non-foaming soluble coffee.

*"Tea extracts"* are typically obtained by extracting tea with a solvent, for example water. *"Dairy products"* may comprise one or more dairy proteins, such as proteins originating from a cow source. For example, the dairy product may be a creamer or a whitener. A non-dairy creamer may also be used. *"Nutritional supplements"* (or dietary supplements) are products that are intended to supplement the diet. For example, dietary supplements can be classed according to the US Dietary Supplement Health and Education Act of 1994. Dietary supplements include minerals, dietary fibres, biochemical precursors and plant sterols.

Artificial sweeteners include saccharin, cyclamates, acesulfame, L-aspartyl based sweeteners such as aspartame, and mixtures of these. Emulsifiers include monoglycerides, diglycerides, lecithin, diacetyl tartaric acid esters of mono-diglycerides (DATE), stearoyl lactylates, modified food starches, polysorbates, PGA, sucrose esters, and mixtures thereof. Stabilizers include dipotassium phosphate and sodium citrate. Flowing agents include, for example, sodium silica aluminate, silicon dioxide, and tri-calcium phosphate.

It is noted that, while the particles of foaming coffee have not been subject to milling, other particles making up the coffee composition may be subject to milling to increase their effectiveness at agglomerating.

At least some of the particles of foaming coffee contained in the coffee composition have not been milled. More preferably, about 50 wt% to about 100 wt% of the particles of foaming coffee have not been milled. More preferably, about 80 wt% to about 100 wt% of the particles of foaming coffee have not been milled, for example at least about 90 wt%, such as about 100 wt%. In particular, the foaming ability and characteristics of the agglomerate become more prominent as the proportion of the foaming coffee particles in the coffee composition that have not been milled increases. For example, the coffee composition may contain substantially only particles of foaming coffee.

Thus, the invention may provide a method of forming an agglomerated foaming coffee, the method comprising the step of agglomerating a coffee composition, the majority of the coffee composition by weight consists of particles of foaming soluble coffee, wherein the particles of foaming soluble coffee have not been milled prior to their agglomeration.

The foaming coffee particles may be made from just a coffee extract or the foaming coffee particles may contain a coffee extract and additional components. For example, the additional components may be dissolved in the liquid coffee extract before the extract is dried to form the soluble coffee.

Preferably, the foaming coffee particles comprise at least about 50% by weight of coffee extracts (i.e. extracts originating from the extraction of coffee beans). More preferably, the foaming coffee particles comprise about 70 wt% to about 100 wt% of coffee extracts, for example at least 90 wt%, even more preferably at least about 100 wt%.

Additional components that may be contained in the foaming coffee particles include carbohydrates, proteins, and/or mixtures thereof. The foaming component may optionally include a dispersed fat in addition or separately to carbohydrate and/or protein.

Examples of carbohydrates include, for example, sugars (such as glucose, fructose, sucrose, lactose, mannose, and maltose), polyhydric alcohols (such as glycerol, propylene glycol, polyglycerols, and polyethylene glycols), sugar alcohols (such as sorbitol, mannitol, maltitol, lactitol, erythritol, and xylitol), oligosaccharides, polysaccharides, starch hydrolysis products (such as maltodextrins, glucose syrups, com syrups, high-maltose syrups, and high-fructose syrups), gums (such as xanthan, alginates, carrageenans, guar, gellan, locust bean, and hydrolyzed gums), soluble fibers (such as inulin, hydrolyzed guar gum, and polydextrose), modified starches (such as physically or chemically modified starches that are soluble or dispersible in water), modified celluloses (such as methylcellulose, carboxymethyl cellulose, and hydroxypropylmethyl cellulose) and/or mixtures thereof.

Examples of proteins include, for example, milk proteins, soy proteins, egg proteins, gelatin, collagen, wheat proteins, hydrolyzed proteins (such as hydrolyzed gelatin, hydrolyzed collagen, hydrolyzed casein, hydrolyzed whey protein, hydrolyzed milk protein, hydrolyzed soy protein, hydrolyzed egg protein, hydrolyzed wheat protein, and amino acids), and/or mixtures thereof.

Examples of fats include, for example, fats, oils, hydrogenated oils, interesterified oils, phospholipids, and fatty acids derived from vegetable, dairy, or animal sources, and fractions or mixture thereof. The fat may also be selected from waxes, sterols, stanols, terpenes, and fractions or mixtures thereof.

Preferably, the foaming coffee particles used in the method of the present invention are particles in which the microstructure is controlled to comprise an interior void space which consists of a majority of gas bubbles of 10 µm or less and a minority of void space in excess of 10 µm. Preferably, at least 75% and most preferably at least 90% of the gas bubbles have sizes of 10 µm or less. Preferably a majority of the gas bubbles have sizes of 5 microns or less. Accordingly, on reconstitution with hot water, a coffee product with a layer of stable espresso-type foam may be produced.

Thus, the inventor has found that, with such a coffee, known agglomeration processes milling adversely affect the number and size distribution of the closed pores, thereby adversely affecting the foaming ability and characteristics of the coffee.

A suitable method of preparing such a foaming coffee and the properties of the resulting soluble coffee are described in EP 0839457, the contents of which are incorporated herein by reference.

Separately or additionally to controlling the closed pores, the foaming coffee particles used in the present invention may comprise closed pores filled with a pressurized gas. Preferably the foaming coffee particles are provided with a plurality of closed pores filled with pressurized gas. Preferably the gas is at super-atmospheric pressure.

The term 'pressurised gas' also refers to entrapped gas or fluid at a temperature and pressure such that the entrapped fluid is in a supercritical state, or where at least a portion of the entrapped gas or fluid is in a liquid form at the conditions of elevated pressure within the closed pores of the particles. The foaming coffee particles containing entrapped pressurised gas may be produced according to the techniques disclosed in patent application numbers US 20060040038 A1 and / or US 20080160139 A1, the contents of which are incorporated herein by reference.

In essence, the method comprises (a) heating dried soluble coffee under sufficient pressure, thereby forcing gas into internal pores of the dried soluble coffee; (b) cooling the heated dried soluble coffee; and (c) depressurizing the cooled coffee, wherein the depressurized cooled coffee has pores filled with pressurized gas. The heating is preferably in the range of 40°C to 130°C. The pressure is preferably in the range of 100 (6.8 bar) to 2000 psi (130 bar) of pressurized nitrogen gas, although higher pressures and/or alternative gases/supercritical fluids may also be used.

The inventor has investigated different methods of agglomeration for foaming soluble coffee in which the internal structure of the foaming coffee is substantially preserved. During these investigations, the inventor has found substantially dry methods of agglomeration to be advantageous.

Without wishing to be bound by theory, the inventor has recognised that agglomeration is often caused by coffee particles passing through a glass transition and becoming sticky, thereby adhering to one another. The transition through the glass transition of the soluble coffee may be caused by an increase in temperature and / or an increase in the moisture content of the soluble coffee. At the same time, however, the inventor has found that coalescence of closed pores may occur as a soluble coffee passes through its glass transition because the coffee changes its state and becomes plastic, facilitating the flow of the material. The inventor has found that these effects during agglomeration can result in some loss of internal structure, which is detrimental to the foaming properties of the resulting agglomerated coffee. Thus, the internal structure of a foaming coffee can be perturbed when the combination of temperature and moisture content of the foaming coffee exceeds the conditions needed for the coffee to pass through a glass transition.

The inventor has then found that the internal structure of the particles can be substantially maintained through agglomeration, sufficient to produce a foaming agglomerated coffee, by controlling the exposure of the particles to heat and moisture such that the surfaces of the particles become bound to one another to form a strong agglomerated particle without substantial disruption of the internal structure of the particles.

When at least a portion of the foaming soluble coffee to be agglomerated comprises soluble coffee particles containing pressurised gas, the inventor has found that the particles containing pressurised gas can be incorporated into the agglomerate structure whilst maintaining at least a portion of their entrapped gas, hence retaining a substantial degree of their foaming performance, which in turn can enhance the foaming performance of the agglomerated product. This is preferably achieved by pre-drying the particles containing pressurised gas such that the Tg (glass transition temperature) of these particles is substantially higher than other foaming or non-foaming particles in the powder that is to be agglomerated. Thus the agglomeration step may be carried out at a temperature higher than the Tg of only part, not all, of the powder that is to be agglomerated. It is thought that this causes the powder particles that are heated to a temperature greater than their Tg to agglomerate, forming a structure which can entrap the drier particles containing pressurised gas, without substantial loss of pressurised gas from these particles, which would normally occur at if these particles were heated to above their Tg. Pre-drying preferably reduces the moisture content of the particles to less than 2%, more preferably less than 1% and most preferably less than 0.5% water by weight of the particles.

Accordingly, the present invention may provide a method of forming an agglomerated foaming coffee composition, the method comprising the step of agglomerating a coffee composition, the majority of the coffee composition by weight consisting of particles of foaming soluble coffee, wherein the step of agglomerating the coffee composition is a dry agglomeration process.

Dry methods of agglomeration, which can also be called non re-wet methods of agglomeration, are methods that do not involve the use of a liquid or gaseous binding agent. For example, the methods may involve the addition of substantially no water and / or steam to the coffee composition being agglomerated in order to cause its agglomeration. It is to be noted that a small amount of moisture may be present, for example in the atmosphere during agglomeration in order to maintain the hydration level of the coffee composition during agglomeration.

In particular, the inventor has found that methods that do not substantially alter and, in particular, do not increase the moisture content of the coffee may be advantageous. One preferred method of dry agglomeration is heating the coffee composition to a temperature at which the coffee composition forms agglomerates.

Without wishing to be bound by theory, if the moisture content of the coffee composition increases during agglomeration, the inventor has recognised that the glass transition temperature of the coffee composition decreases. In addition, if the coffee composition is exposed to a temperature approaching or exceeding its glass transition temperature for a prolonged period of time, the internal structure of the foaming coffee may rearrange, reducing its foaming capacity and / or the quality of the foam that it produces. In addition, when particles containing entrapped pressurised gas are present, loss of pressurised gas can also occur due to moisture uptake by the coffee particles. Therefore, it is contemplated that an agglomerate produced by wet methods of agglomeration may be more susceptible to degradation of its foaming properties, for example during any subsequent heating step or during subsequent storage.

The heating step for agglomeration may itself be carried out at or above the glass transition temperature of the particles of foaming soluble coffee. As noted above, heating to above the glass transition temperature may affect the foaming properties of the composition. However, the short time needed to produce agglomeration may be short enough in order not to substantially affect the foaming properties of the composition.

For example, by heating the composition on an endless belt or an array of trays loaded with a layer of the coffee composition, the heating time and conditions can be carefully controlled so that the foaming properties of the coffee composition are maintained during the actual agglomeration process. Suitable equipment for the heating step includes for example contact cookers supplied by Formcook AB, Helsingborg, Sweden, or Berief Innovativ GmbH & Co. KG, Wadersloh-Diestedde, Germany.

The time taken for agglomeration depends on the thickness of the layer provided, but may, for example, extend from 2 minutes to 30 minutes. For example, a layer of, for example, 2 to 50 mm may be provided before heating. Such a process may form a cake of material, which can be disintegrated into granular material. Disintegration may be carried out under careful conditions so as not to perturb the internal structure of the foaming coffee.

In addition, heating is preferably provided by means of conduction using, for example, heating elements in contact with an endless belt or the array of trays containing the layer of coffee. Without wishing to be bound by theory, the inventor has found that heating by conduction may result in the surface layer of the coffee particles being heated before the inner layers of the coffee particles. Thus, the surface layer may pass through its glass transition whereas the inner layers may stay below the coffee's glass transition temperature or pass through the coffee's glass transition at a decreased rate compared to the surface. Thus, while there may be some loss of internal structure of a surface layer, the internal structure of all but the surface layer may be substantially preserved. The inventor has found this arrangement causes a satisfactory retention of foaming properties during agglomeration while, at the same time, allowing the individual coffee particles to agglomerate.

For example, the heating step may be carried out at a temperature of between 5 and 50°C above the glass transition temperature of the coffee composition. The lower limit can help coffee composition to become fluid enough to form strong bonds being neighbouring particles of the agglomerate. The upper limit can prevent degradation of the foaming properties of the composition during agglomeration. For example, the mixture may be heated to a temperature of 40°C or less above the glass transition temperature of the coating composition, for example 30°C or less, such as 20°C. Equally, the lower limit of the heating of the mixture may be 10°C or more above the glass transition temperature of the coating composition, or 15°C or more.

Glass transition temperature may be measured using Differential Scan Calorimetry (DSC). DSC may be carried out, for example, using an instrument obtainable from Perkin Elmer, for example using their 'Hyper DSC' machine. An example of a scan rate at which scanning may be performed is 2°C / minute.

For example, the coffee composition may be heated at a temperature in the range of 60 to 120°C to affect agglomeration, for example 90 to 1,20°C. For example, if the coffee composition is provided in a layer structure and heated by heating elements to form a cake-like structure, the temperature of the heating elements may be these temperatures. This may facilitate the effects described previously of transferring heat by conduction the surface layer in preference to the core of the coffee particles to agglomerate them.

The agglomeration step is preferably a method where the degree of compaction can be carefully controlled, which can desirably result in the density of the agglomerated product being of the same order of magnitude as the starting material (i.e. within about +/- 25% of the starting material). For example, the degree of compaction can be controlled by compacting a bed of coffee particles of uniform height between two parallel heating plates which are set at a fixed distance from each other. The ratio of the coffee particle bed height and the distance between the heating plates can be varied such that the degree of compaction can be controlled. This ratio can be for example from about 1:1 to about 2:1. In an alternative embodiment, no external pressure apart from the weight of the coffee itself and any pressure from the atmosphere in which the agglomeration is being carried out is applied.

Turning to the actual product of the method of the present invention, the method produces an agglomerated foaming coffee composition. Since the foaming properties of the composition have been maintained since it has not been subject to milling (or, in a preferred aspect, exposure to a wet agglomeration process), the foaming properties of the agglomerated coffee resemble those of the starting material.

The product may be individual particles of agglomerated coffee or may be a cake-like structure that can be divided up or formed into smaller units and / or disintegrated before being provided to a consumer. The cake like structure may be provided, for example, when the coffee is agglomerated as a layer that is heated, for example, by means of conduction. The cake like structure may also be formed for example by filling the coffee into a mould prior to agglomeration in order to control the shape and/or size of the agglomerated product. The cake like structure may also be divided up or formed in such a way to control the shape and/or size of the resulting agglomerated coffee, so that individually shaped particles are created. The shaped particles may be of a uniform or non-uniform shape and/or size depending on the desired appearance of the agglomerated product.

The inventor has also found that agglomeration by the method described above can create a substantial number of open pores in the agglomerated product, which are present as three dimensional channels between the agglomerated particles. It is contemplated that it is these open pores which draw water into the granule by capillary action upon reconstitution, thereby allowing the agglomerated product to dissolve easily when reconstituted with hot water for example.

Preferably, the bulk density of the final composition is from 0.16 to 0.45 g/cm³, preferably 0.16 to 0.30 g/cm³, more preferably from 0.19 to 0.25 g/cm³, and even more preferably from 0.20 to 0.24 g/cm³. The tapped bulk density is generally from 0.17 to 0.32 g/cm³, preferably from 0.20 to 0.26 g/cm³. This is approximately the same as a standard soluble coffee composition and, as a result, these ranges of bulk densities are advantageous for consumer acceptance because a consumer may simply use the composition in the same amount as would normally be used for a conventional soluble coffee.

Although the bulk density and tap density of the final composition is approximately the same as a standard soluble coffee composition, the skeletal density of the final composition is typically lower than a standard soluble coffee composition, due to the presence of gas-filled closed pores. For example, the skeletal density of the final composition may be typically below about 1.3 g/cm³, such as between 0.5 to 1.1 g/cm³, whereas the skeletal density of conventional soluble coffee granules is typically above about 1.4 g/cm³.

Bulk density (g/cm³) is determined by measuring the volume (cm³) that a given weight (g) of soluble coffee occupies when poured though a funnel into a graduated cylinder. Tap density (g/cm³) is determined by pouring soluble coffee into a graduated cylinder, vibrating the cylinder until the coffee product settles to its lowest volume, recording the volume, weighing the product, and dividing weight by volume. Skeletal density (g/cm³) is determined by measuring the volume of a weighed amount of soluble coffee using a helium pycnometer (Micromeritics AccuPyc 1330) and dividing weight by volume. Skeletal density is a measure of coffee product density that includes the volume of any pores present in individual soluble coffee particles that are sealed to the atmosphere and excludes the interstitial volume between coffee particles and the volume of any pores present in individual soluble coffee particles that are open to the atmosphere.

All measurements herein are measured at room temperature (20°C) and 1 atmospheric pressure unless otherwise stated.

### EXAMPLES

The present invention will now be described with reference to the following non-limiting examples. The following examples are not in accordance with the invention.

### EXAMPLE 1

A quantity of foaming spray-dried coffee powder was prepared by injecting nitrogen gas under pressure into a liquid coffee extract and then spray-drying the liquid coffee extract to produce a powder with a plurality of microscopic closed pores.

100g of the foaming soluble spray-dried coffee powder, which had a closed pore volume of 1.0 cm³/g and a bulk density of 0.23 g/cm³ was spread onto a metal plate and agglomerated by exposing the powder to a humid environment in a sealed container. The humid environment was created by placing a quantity of water at a temperature of approximately 15°C onto a second metal plate, which was also placed in the sealed container.

After approximately 24 hours in the humid environment, the foaming spray-dried coffee particles had agglomerated to form a slab of coffee. This slab was stored overnight in a desiccator to reduce the moisture content of the coffee. The dried slab was then broken into granules by breaking the slab through a 2.8 mm sieve by hand using a spoon. The resulting granules were then sieved by hand to remove any material (including un-agglomerated particles or fines generated during granulation) that was less than 500 microns in size.

When 3g of the resulting agglomerated instant coffee product was reconstituted with 200 ml of water at 85°C in a beaker of 65 mm internal diameter, a layer of foam was produced which covered the entire surface of the resulting instant coffee beverage.

It was further noted that the coffee had an excellent solubility when reconstituted in hot water. In particular, no un-dissolved particles remained after stirring for about 2 seconds with a spoon.

The foaming agglomerated instant coffee granules had a bulk density of 0.23 g/cm³ and a closed pore volume of 0.35 cm³/g.

The amount of foam generated by the foaming agglomerated instant coffee granules was then measured using the quantitative in-cup foam test, the results of which are shown in Table 1.

**Table 1**

| | Foam volume (cm³) | |
|---|---|---|
| Sample | 1 minute | 10 minutes |
| Commercially available non-agglomerated foaming spray-dried instant coffee powder | 4.5 | 3.0 |
| Commercially available agglomerated instant coffee granules | 0.0 | 0.0 |
| Agglomerated foaming instant coffee granules produced using the method of Example 1 | 2.5 | 1.0 |

### EXAMPLE 2

A further quantity of foaming spray-dried coffee powder was prepared by injecting nitrogen gas under pressure into a liquid coffee extract and then spray-drying the liquid coffee extract to produce a powder with a plurality of microscopic closed pores.

This further quantity of foaming spray-dried coffee powder had a moisture content of about 3.5% by weight (wet basis), a closed pore volume of about 0.9 cm³/g, a bulk density of about 22 g/cm³, and an average particle size D₅₀ of about 150µm.

An amount of this foaming spray-dried powder was then agglomerated using a contact cooking device. The contact cooking device comprised two parallel electrically-heated metal heating plates held at a fixed distance from each other, with an endless belt passing between the two plates. The distance between the two plates was set to about 10mm, and the temperature of the plates was set to about 105ºC. The speed of the belt was set such that the residence time of the powder between the heating plates was about 4 minutes and 30 seconds.

A quantity of foaming spray-dried coffee powder was spread on to the belt prior to the heating plates, and was reduced in height to form a bed with a uniform depth of about 17mm using an inverted weir. The bed of powder on the belt was then passed through the heating plates, whereby the powder particles were agglomerated into a slab. The powder was not milled or reduced in size by any means prior to the agglomeration. After passing through the heating plates, the slab was left to cool until the temperature of the slab dropped to below about 50°C. The slab was then granulated by breaking the slab through a sieve by hand using a spoon to produce granules of less than about 3mm in size. The resulting granules were then sieved by hand to remove any material (including un-agglomerated particles or fines generated during granulation) that was less than 1 mm in size.

When 3g of the resulting agglomerated instant coffee product was reconstituted with 200 cm³ of water at 85°C in a beaker of 65 mm internal diameter, a layer of foam was produced which covered the entire surface of the resulting instant coffee beverage, and the layer of foam persisted for several minutes.

It was noted that the agglomerated granules closely resembled conventional freeze-dried coffee granules in terms of their general appearance, shape, size and colour.

The agglomerated granules had a bulk density of about 0.18 g/cm³ and a closed pore volume of 0.87 cm³/g.

### EXAMPLE 3

A quantity of foaming agglomerated coffee granules were produced using the method of EXAMPLE 2, but with a contact cooking device comprising thermal fluid-heated heating plates in place of the electrically-heated heating plates of EXAMPLE 2, and with a powder bed height of about 20mm prior to agglomeration.

When 3g of the resulting agglomerated instant coffee product was reconstituted with 200 cm³ of water at 85°C in a beaker of 65 mm internal diameter, a layer of foam was produced which covered the entire surface of the resulting instant coffee beverage, and the layer of foam persisted for several minutes.

It was noted that the agglomerated granules closely resembled conventional freeze-dried coffee granules in terms of their general appearance, shape, size and colour.

The agglomerated granules had a bulk density of about 0.19 g/cm³ and a closed pore volume of 0.86 cm³/g.

### EXAMPLE 4

A quantity of the foaming spray-dried coffee powder of example 2 was prepared. This powder was then subjected to an atmosphere of pressurised gas at a temperature above the Tg of the coffee, thereby forcing pressurised gas to fill the closed pores of the powder particles (as described in US patent application number 20060040038 A1). The powder was then cooled to a temperature below the Tg and the pressure released. The resulting coffee powder contained entrapped pressurised gas, and generated a substantial foam layer when reconstituted with hot water. This coffee powder containing entrapped pressurised gas was then dried in a vacuum oven at a pressure of about 0.4 mbar and a temperature of about 30-50°C so as to reduce the moisture content to less than about 0.5% by weight (wet basis). This drying process did not significantly affect the pressurised gas content or foaming properties of the powder particles.

A quantity of the aforementioned dried coffee powder containing pressurised gas, with a moisture content of less than about 0.5% by weight (wet basis) was then mixed by hand with a further quantity of foaming spray-dried coffee powder of Example 2 (which had not been subjected to the further pressurisation or drying process). Since the powder particles containing pressurised gas had been dried to a moisture content of less than about 0.5% by weight (wet basis), the Tg of these particles was substantially higher than the Tg of the foaming spray-dried powder particles that had not been further dried. The particles containing entrapped pressurised gas comprised about 20% by weight of the resulting mixture.

The mixture of powders was then agglomerated according to the method of Example 2, although in this case the powder bed depth was about 3-5mm, and the distance between the heating plates was about 3mm.

The resulting agglomerated instant coffee product was observed to contain a significant quantity of entrapped gas, such that a 'cracking' sound was heard when the product was reconstituted with hot water.

When 3g of the agglomerated instant coffee product was reconstituted with 200 cm³ of water at 85°C in a beaker of 65 mm internal diameter, a layer of foam was produced which covered the entire surface of the resulting instant coffee beverage, and the layer of foam persisted for several minutes.

### EXAMPLE 5 - Comparative Example

The amount of foam generated by the foaming agglomerated instant coffee granules of Example 2 and 3 was measured using the quantitative in-cup foam test, the results of which are shown in Table 2.

**Table 2**

| | Foam volume (cm³) | |
|---|---|---|
| Sample | 1 minute | 10 minutes |
| Agglomerated foaming instant coffee granules produced using the method of Example 2 | 3.75 | 2.5 |
| Agglomerated foaming instant coffee granules produced using the method of Example 3 | 4.0 | 3.0 |

## Claims

1. A method of forming an agglomerated foaming coffee composition, the method comprising the step of agglomerating a coffee composition, the majority of the coffee composition by weight consisting of particles of foaming soluble coffee having an internal structure comprising closed pores in which gas is contained,
the coffee composition further comprising one or more of, a tea extract, a dairy product, a sweetener, a nutritional supplement, natural and/or artificial sweeteners, emulsifiers, stabilisers, thickeners, flowing agents, non-foaming coffee, or non-foaming soluble coffee,
wherein at least some of the particles of foaming soluble coffee have not been milled prior to their agglomeration.

2. The method of claim 1 , wherein the particles of foaming coffee-are formed by spray-drying a soluble coffee extract and wherein the spray-dried particles are not milled between being been formed by spray-drying and the step of agglomerating the coffee composition.

3. The method of claim 1 or claim 2, wherein the step of agglomerating the coffee composition is a non-rewet agglomeration process.

4. The method of any one of the preceding claims, wherein the step of agglomerating the coffee composition comprises heating the coffee composition to a temperature at which the composition forms agglomerates.

5. The method of claim 4, wherein the moisture content of the coffee composition is not increased during the step of agglomerating the coffee composition.

6. The method of claim 4 or claim 5, wherein heating is carried out by means of conduction.

7. The method of any of the preceding claims, wherein at least some of the foaming coffee particles are provided with a plurality of closed pores filled with pressurized gas.

8. The method of any of the preceding claims, wherein the coffee composition comprises non-foaming coffee.

9. The method of claim 1, wherein the composition consists of at least 50% by weight of foaming soluble coffee, wherein:
(i) the composition exhibits a foam volume using the quantitative in-cup foam test of 2.0 cm³ or greater after 1 minute; and / or
(ii) the composition exhibits a foam volume using the quantitative in-cup foam test of 0.7 cm³ or greater after 10 minutes; and / or
(iii) the composition exhibits a foam volume after 10 minutes that is at least 40% of the foam volume present after 1 minute; and / or
(iv) the composition has a closed pore volume greater than 0.3 cm³/g,
wherein, in the quantitative in-cup foam test 1.8g of the composition being tested is weighed into a 100cm³ cylindrical glass measuring cylinder of 25 mm diameter and 250 mm height at 20°C, and then 70cm³ of water at 80°C is poured onto it from a beaker through a funnel at the top of the measuring cylinder over a period of about 5 seconds and the foam volume generated by the composition upon reconstitution is noted.

10. An agglomerated coffee composition obtainable by the process of any one of claims 1 to 8.

## Patentansprüche

1. Verfahren zum Bilden einer agglomerierten schäumenden Kaffeezusammensetzung, wobei das Verfahren den Schritt von Agglomerieren einer Kaffeezusammensetzung umfasst, wobei der gewichtsmäßige Großteil der Kaffeezusammensetzung aus Partikeln schäumenden löslichen Kaffees besteht, welcher eine interne Struktur aufweist, welche geschlossene Poren, in denen Gas enthalten ist, umfasst,
wobei die Kaffeezusammensetzung weiter eines oder mehr eines Teeextrakts, eines Milchprodukts, eines Süßungsmittels, eines Nahrungsergänzungsmittels, natürlicher und/oder künstlicher Süßungsmittel, Emulgatoren, Stabilisierungsmittel, Verdickungsmittel, Fließmittel, nicht-schäumenden Kaffees oder nicht-schäumenden löslichen Kaffees umfasst,
wobei mindestens einige der Partikel von schäumendem löslichem Kaffee nicht vor ihrer Agglomeration gemahlen worden sind.

2. Verfahren nach Anspruch 1, wobei die Partikel des schäumenden Kaffees durch Sprühtrocknen eines löslichen Kaffeeextrakts gebildet werden und wobei die sprühgetrockneten Partikel nicht zwischen dem Gebildet werden durch Sprühtrocknen und dem Agglomerationsschritt der Zusammensetzung gemahlen werden.

3. Verfahren nach Anspruch 1 oder Anspruch 2, wobei der Agglomerationsschritt der Kaffeezusammensetzung ein nicht-wiederbefeuchten-Agglomerationsverfahren ist.

4. Verfahren nach einem der vorangehenden Ansprüche, wobei der Agglomerationsschritt der Kaffeezusammensetzung Heizen der Kaffeezusammensetzung auf eine Temperatur bei der die Zusammensetzung Agglomerate bildet, umfasst.

5. Verfahren nach Anspruch 4, wobei der Feuchtigkeitsgehalt der Kaffeezusammensetzung während des Agglomerationsschritts der Kaffeezusammensetzung nicht erhöht wird.

6. Verfahren nach Anspruch 4 oder Anspruch 5, wobei Heizen durch Leitung durchgeführt wird.

7. Verfahren nach einem der vorangehenden Ansprüche, wobei mindestens einige der schäumenden Kaffeepartikel mit einer Vielzahl an geschlossenen Poren, welche mit unter Druck befindlichem Gas gefüllt sind, bereitgestellt werden.

8. Verfahren nach einem der vorangehenden Ansprüche, wobei die Kaffeezusammensetzung nicht-schäumenden Kaffee umfasst.

9. Verfahren nach Anspruch 1, wobei die Zusammensetzung aus mindestens 50 Gewichts-% nicht-schäumenden Kaffees besteht, wobei:
(i) die Zusammensetzung ein Schaumvolumen, unter Verwendung des quantitativen In-Cup-Schaum-Tests, von 2,0 cm³ oder größer nach 1 Minute aufweist; und/oder
(ii) die Zusammensetzung ein Schaumvolumen, unter Verwendung des quantitativen In-Cup-Schaum-Tests, von 0,7 cm³ oder größer nach 10 Minute aufweist; und/oder
(iii) die Zusammensetzung ein Schaumvolumen nach 10 Minute aufweist, das mindestens 40% des Schaumvolumens ist, welches nach 1 Minute vorliegt; und/oder
(iv) die Zusammensetzung ein geschlossenes Porenvolumen größer als 0,3 cm³/g aufweist, wobei in dem quantitativen In-Cup-Schaum-Test 1,8 g der Zusammensetzung, welche getestet wird, in einen 100 cm³ zylindrischen Glasmesszylinder von 25 mm Durchmesser und 250 mm Höhe bei 20°C gewogen wird und anschließend 70cm³ Wasser bei 80°C auf sie aus einem Becher durch einen Trichter am oberen Ende des Messzylinders über einen Zeitraum von etwa 5 Sekunden gegossen wird und das durch die Zusammensetzung erzeugte Schaumvolumen auf Lösen zur ursprünglichen Konzentration notiert wird.

10. Agglomerierte Kaffeezusammensetzung erhältlich durch das Verfahren nach einem der Ansprüche 1 bis 8.

## Revendications

1. Procédé de formation d'une composition moussante agglomérée de café, le procédé comprenant l'étape qui consiste à agglomérer une composition de café, la majorité de la composition de café en poids constituée de particules de café soluble moussant ayant une structure interne comprenant des pores fermés dans lesquels le gaz est contenu,
la composition de café comprenant en outre un ou plusieurs parmi un extrait de thé, un produit laitier, un édulcorant, un supplément nutritionnel, des édulcorants naturels et/ou artificiels, des émulsifiants, des stabilisants, des épaississants, des agents agglutinants, un café non moussant ou un café soluble non moussant,
dans lequel au moins certaines des particules de café soluble moussant n'ont pas été broyées avant leur agglomération.

2. Procédé de la revendication 1, dans lequel les particules de café moussant sont formées par séchage par pulvérisation d'un extrait de café soluble et dans lequel les particules séchées par pulvérisation ne sont pas broyées entre le moment où elles sont en train d'être formées par séchage par pulvérisation et l'étape d'agglomération de la composition de café.

3. Procédé de la revendication 1 ou 2, dans lequel l'étape d'agglomération de la composition de café est un processus d'agglomération de non-réhumidification.

4. Procédé de l'une quelconque des revendications précédentes, dans lequel l'étape d'agglomération de la composition de café comprend le fait de chauffer la composition de café à une température à laquelle la composition forme des agglomérats.

5. Procédé de la revendication 4, dans lequel la teneur en humidité de la composition de café n'est pas augmentée au cours de l'étape d'agglomération de la composition de café.

6. Procédé de la revendication 4 ou 5, dans lequel le chauffage est effectué au moyen de conduction.

7. Procédé de l'une des revendications précédentes, dans lequel au moins certaines des particules de café moussant sont pourvues d'une pluralité de pores fermés remplis de gaz sous pression.

8. Procédé de l'une des revendications précédentes, dans lequel la composition de café comprend du café non moussant.

9. Procédé de la revendication 1, dans lequel la composition est constituée d'au moins 50% en poids de café soluble moussant, dans lequel ;
(i) la composition présente un volume de mousse en utilisant le test de mousse en tasse quantitatif supérieur ou égal à 2,0 cm³ après 1 minute ; et/ou
(ii) la composition présente un volume de mousse en utilisant le test de mousse en tasse quantitatif supérieur ou égal à 0,7 cm³ après 10 minutes ; et/ou
(iii) la composition présente un volume de mousse après 10 minutes qui est au moins 40% du volume de mousse présent après 1 minute ; et/ou
(iv) la composition a un volume de pores fermés supérieur à 0,3 cm³/g,
où, dans le test de mousse en tasse quantitatif, 1,8 g de la composition à tester est pesée dans un cylindre de mesure en verre cylindrique de 100 cm³ ayant 25 mm de diamètre et 250 mm de hauteur à 20°C, ensuite 70 cm³ d'eau à 80°C est versé sur celui-ci à partir d'un bêcher à travers un entonnoir au niveau de la partie supérieure du cylindre de mesure au cours d'une période d'environ 5 secondes
et le volume de mousse généré par la composition lors de la reconstitution est noté.

10. Composition agglomérée de café pouvant être obtenue par le processus de l'une quelconque des revendications 1 à 8.
